# EUROPEAN PATENT SPECIFICATION

(11) **EP 3 136 674 B1**
(45) Date of publication and mention of the grant of the patent: **09.10.2019**
(21) Application number: 14890385.9
(22) Date of filing: 05.08.2014
(51) Int. Cl.: H04L 29/06, H04N 21/443, H04L 29/08, H04L 12/24, H04N 21/262, H04N 21/458, H04N 21/462, H04N 21/84

(54) **METHOD AND DEVICE FOR PROCESSING MESSAGE OF IPTV**
VERFAHREN UND VORRICHTUNG ZUR VERARBEITUNG EINER IPTV-NACHRICHT
PROCÉDÉ ET DISPOSITIF DE TRAITEMENT DE MESSAGE D'IPTV

(30) Priority: 22.04.2014 CN 201410164301
(43) Date of publication of application: 01.03.2017
(73) Proprietor: ZTE Corporation, Shenzhen, Guangdong 518057 (CN)
(72) Inventor: FEI, Lihua, Shenzhen Guangdong 518057 (CN); XIE, Shizhao, Shenzhen Guangdong 518057 (CN)
(74) Representative: Deambrogi, Edgardo
(86) International application number: PCT/CN2014/083748
(87) International publication number: WO 2015/161582

(56) References cited:
- EP-A1- 1 234 451
- EP-A1- 1 847 927
- CN-A- 101 710 934
- CN-A- 102 291 616
- US-A1- 2001 054 112
- US-B1- 8 347 333

## Description

### Technical Field

The disclosure relates to the field of telecommunication, and in particular to a method and device for processing messages of Internet Protocol Television or Interactive Personal Television (IPTV).

### Background of the Disclosure

IPTV is a technology that can provide all kinds of real-time and non-real time multi-media services to various users, such as TV users, personal computer users or mobile terminal users, via the internet, especially a broadband network. In IPTV, a TV, a personal computer or a mobile terminal (such as a cell phone) is used as a display terminal, and a top-set box, a computer or a mobile terminal (such as a cell phone) is connected to the internet.

Nowadays, with the rapid development of IPTV services, there are several IPTV points, already having hundreds of thousands of users or even multi-million users, in both domestic and foreign markets. Because of the increase of user amount and the operators' requirements for the improvement and enrichment of multi-media services in order to satisfy needs of users, an IPTV system needs to be upgraded on the basis of original service system in order to realize various kinds of needs. For now, an upgrade of the whole IPTV system is very complicated and difficult, which involves a large number of edge devices. As to an IPTV point having millions of users, there may be thousands of edge devices, an upgrade of such IPTV point is very time-consuming and services have to be interrupted, which not only influence the user experiences, but also introduce a certain risk. If there is a breakdown after the upgrade is completed, the thousands of edge devices may need to be upgraded again.

A method of regional upgrade may realize a regional upgrade as well as an upgrade in batches of thousands of edge devices without interrupting services during the upgrade process, thus the upgrade has no impact on users and the users have no perception of such upgrade. The profit loss and the operation loss of telecom operators caused by the upgrade may be reduced to a maximum extent, and favorable service experiences of users are ensured.

To summarize, if the upgrade of IPTV service systems needs not to interrupt services and can be completed in batches without affecting user experiences, such upgrade can not only provide favorable safeguard for the operation of telecom operators, but also offer convenience for end users. However, if the upgrade is carried out in batches, there are various versions of service systems existing simultaneously during the upgrade process, which may bring about extreme difficulty for processing of services.

A service upgrade of IPTV systems in batches adopted in the related art may result in a problem that services cannot be processed normally. Aimed at such a problem, there are no effective technical solutions at present.

Patent document EP1234451 provides technical solutions; however, the above mentioned problem still remains unsolved.

### Summary of the Disclosure

In embodiments of the present disclosure, a method according to independent claim 1 and a corresponding device according to independent claim 4 for processing messages of IPTV are provided to at least solve the problem in the relevant art that services cannot be processed normally due to the service upgrade of the IPTV system in batches.

According to one embodiment of the disclosure, a method for processing messages of IPTV is provided. The method includes: acquiring multiple Electronic Program Guide (EPG) versions which simultaneously exist; acquiring one or more corresponding view types according to the multiple EPG versions, wherein a group of EPG versions to be processed in a same manner are set to collectively correspond to one view type; and processing request messages of the multiple EPG versions according to the one or more corresponding view types.

Before acquiring one or more corresponding view types according to the multiple EPG versions, the method may further include: setting one or more EPG versions, which have a same number of table fields and have table structures in which a same field has a same length, to collectively correspond to one view type.

After setting the one or more EPG versions, which have a same number of table fields and have table structures in which a same field has a same length, to collectively correspond to one view type, the method may further include: storing, into a control point, a corresponding relation between the one or more EPG versions, which have the same number of table fields and have the table structures in which the same field has the same length, and the view type corresponding to the one or more EPG versions.

Acquiring the one or more corresponding view types according to the multiple EPG versions may further include: determining the one or more corresponding view types according to the multiple EPG versions; reading the one or more corresponding view types from a service database.

Before processing the request messages of the multiple EPG versions according to the one or more corresponding view types, the method may further include: acquiring a corresponding interface type of current request messages; judging, based on the interface type, whether to process request messages of the multiple EPG versions according to the one or more corresponding view types.

The process of judging, based on the interface type, whether to process request messages of the multiple EPG versions according to the one or more corresponding view types, may include at least one of:
in the case that the interface type is a File Transfer Protocol (FTP) interface, processing the request messages of multiple EPG versions according to the one or more corresponding view types;
in the case that the interface type is a Transmission Control Protocol (TCP) interface and/or a JavaScript Object Notation (JSON) interface, processing the request messages of the multiple EPG versions directly;
in the case that the interface type is a Hypertext Transfer Protocol (HTTP) and/or an Extensible Markup Language (XML) interface, converting a type of the request messages into JSON type and processing the request messages of the multiple EPG versions directly.

According to another embodiment of the present disclosure, a device for processing messages of IPTV is provided. The device includes: a first acquiring component, configured to acquire multiple EPG versions which simultaneously exist; a second acquiring component, configured to acquire one or more corresponding view types according to the multiple EPG versions, wherein a group of EPG versions to be processed in a same manner are set to collectively correspond to one view type; and a processing component, configured to process request messages of the multiple EPG versions according to the one or more corresponding view types.

The device may further include a classifying component which is configured to set one or more EPG versions, which have a same number of table fields and have table structures in which a same field has a same length, to collectively correspond to one view type.

The device may further include a storing component which is configured to store, into a control point, a corresponding relation between the one or more EPG versions, which have the same number of table fields and have the table structures in which the same field has the same length, and the view type corresponding to the one or more EPG versions.

The second acquiring component includes: a determining element which is configured to determine the one or more corresponding view types according to the multiple EPG versions; a reading element which is configured to read the one or more corresponding view types from a service database.

The device may further include: a third acquiring component which is configured to acquire a corresponding interface type of current request messages; a judging component which is configured to judge, based on the interface type, whether to process request messages of the multiple EPG versions according to the one or more corresponding view types.

The judging component includes at least one of the following elements: a first processing element, which is configured to, in the case that the interface type is a FTP interface, process the request messages of the multiple EPG versions according to the one or more corresponding view types; a second processing element, which is configured to, in the case that the interface type is a TCP interface and/or a JSON interface, process the request messages of the multiple EPG versions directly; a third processing element, which is configured to, in the case that the interface type is a HTTP and/or a XML interface, convert a type of the request messages into JSON type and process the request messages of the multiple EPG versions directly.

According to the embodiments of the present disclosure, multiple EPG versions which simultaneously exist are acquired, one or more corresponding view types are acquired according to the multiple EPG versions, wherein a group of EPG versions to be processed in a same manner are set to collectively correspond to one view type, and request messages of the multiple EPG versions are processed according to the one or more corresponding view types. The problem that services cannot be processed normally due to a service upgrade of IPTV systems in batches in the relevant art, can be solved by using the technical solution provided by embodiments of the disclosure. Thus, a technical basis is provided for realizing the service upgrade of IPTV systems in batches, and the losses of benefits and operation of an operator caused by the upgrade may be reduced to a maximum extent, and favorable service experiences of users are ensured.

### Brief Description of the Accompanying Drawings

The accompanying drawings constituting a part of the application are included to provide further understanding of the present application. The schematic embodiments and description thereof the present disclosure are intended to explain the present application, and do not constitute improper restriction to the invention. In the accompany drawings:
Fig. 1 is a flow chart of a method of processing messages of IPTV according to one embodiment of the disclosure;
Fig. 2 is a structure diagram of a device for processing messages of IPTV according to another embodiment of the present disclosure;
Fig. 3 is a structure diagram of realizing a regional upgrade of the IPTV system according to another embodiment of the disclosure;
Fig. 4 is an exemplary classification diagram of a protocol number management according to another embodiment of the disclosure;
Fig. 5 is a flow diagram of acquiring different synchronous data by two EPG versions according to another embodiment of the disclosure.

### Detailed Description of the Embodiments

Embodiments of the present disclosure will be described hereinafter with reference to specific embodiments and accompanying drawings. It should be noted that the embodiments in the present disclosure and characteristics in the embodiments can be arbitrarily combined with each other in the case of no conflict.

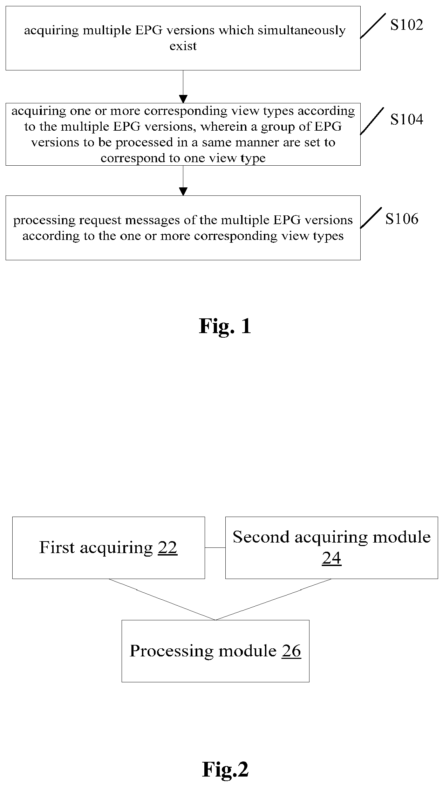

A method of processing messages of IPTV is provided in the present embodiment. Fig. 1 is a flow chart of a method of processing messages of IPTV according to one embodiment of the disclosure. As shown in Fig. 1, the method includes the following steps:
Step S102, acquiring multiple EPG (Electronic Program Guide, short for EPG, the index and navigation of all kinds of services of IPTV is performed by the EPG system) versions which simultaneously exist;
Step S104, acquiring one or more corresponding view types according to the multiple EPG versions, wherein a group of EPG versions to be processed in a same manner are set to collectively correspond to one view type;
Step S106, processing request messages of the multiple EPG versions according to the one or more corresponding view types.

By implementing abovementioned steps of the present embodiment, multiple EPG versions which exist simultaneously can be classified according to the view types, and request messages of the multiple EPG versions can be processed according to the corresponding view types. Therefore, the IPTV system, which is mainly processed by a control point (short for CP, i.e. the service control component in the IPTV system), can process the request messages normally in a situation where multiple EPG versions exist simultaneously. The problem in the relevant art that services cannot be processed normally due to the service upgrade in batches of the IPTV is solved. A technical basis is provided for realizing the service upgrade of IPTV systems in batches, therefore the losses of benefits and operation of an operator caused by the upgrade may be reduced to a maximum extent, and favorable service experiences of users are ensured.

Optionally, before acquiring one or more corresponding view types according to the multiple EPG versions, one or more EPG versions, which have a same number of table fields and have table structures in which a same field has a same length, may be set to collectively correspond to one view type. By using this way to classify the EPG versions into view types, the processing manner may be more convenient and have a better processing efficiency.

Optionally, after setting the one or more EPG versions, which have a same number of table fields and have table structures in which a same field has a same length, to collectively correspond to one view type, a corresponding relation between the one or more EPG versions, which have the same number of table fields and have the table structures in which the same field has the same length, and the view type corresponding to the one or more EPG versions may be stored into a CP. Meanwhile, each view type is stored in a service database (short for DB, i.e., a service database of the IPTV system). There is a higher reading efficiency by using such storage manner.

Optionally, during the process of reading the view types, the abovementioned way of acquiring one or more corresponding view types according to the multiple EPG versions may be implemented by determining one or more corresponding view types according to the multiple EPG versions and then reading the one or more corresponding view types from the DB.

As an optional way for implementation, for parse types corresponding to some interfaces, there is no difference, during a parsing process, with regard to the number of table fields and the length of the same field within a table structure of different EPG versions. Thus, there is a very small or even no impact of different EPG versions on these interfaces, therefore processing manners of request messages may depend on interface types so as to enhance processing efficiency. Specifically, before processing the request messages of the multiple EPG versions according to the one or more corresponding view types, interface types corresponding to current request messages may be acquired, and based on the interface types, a judgment is made as to whether to process request messages of the multiple EPG versions according to the one or more corresponding view types.

Optionally, based on the interface types, specific embodiments of determining whether to process request messages of the multiple EPG versions according to the one or more corresponding view types may be listed but not limited to as follows.

In the case that the interface type is a File Transfer Protocol (short for FTP) interface, the processing of request messages of the multiple EPG versions may be implemented according to the one or more corresponding view types.

In the case that the interface type is a Transmission Control Protocol (short for TCP) interface and/or a JavaScript Object Notation (short for JSON) interface, because different EPG versions have no impact on these two interfaces during the parsing process, a normal processing manner may be directly applied to the request messages of the multiple EPG versions.

In the case that the interface type is a Hypertext Transfer Protocol (short for HTTP, i.e., the communication rule between internet browsers and servers) interface and/or an Extensible Markup Language (short for XML) interface, if conventional parsing manners of these two interfaces are implemented directly, the parsing may fail. However, after converting the parsing manner into JSON type, the multiple EPG versions do not have an impact on these two interfaces. Therefore, a type of the request messages may be converted into JSON type, and then a normal processing manner may be directly applied to the request messages of the multiple EPG versions.

In another embodiment, a device for processing messages of IPTV is provided, the device is configured to achieve abovementioned embodiment and alternative embodiments, what is already described may not be discussed again. As used hereinafter, the terminology "component" may be software or hardware or a combination of software and hardware which achieves predefined functions. Though the device described below may be preferably implemented by software, hardware and a combination of hardware and software may also be possible and conceivable.

Fig. 2 is a structure diagram of a device for processing messages of IPTV according to another embodiment of the present disclosure. As shown in Fig. 2, the device includes: a first acquiring component 22, a second acquiring component 24 and a processing component 26. A detailed description of each component is described as follows.

The first acquiring component 22 is configured to acquire multiple EPG versions which simultaneously exist. The second acquiring component 24, coupled with the first acquiring component 22, is configured to acquire one or more corresponding view types according to the multiple EPG versions acquired by the first acquiring component 22, wherein a group of EPG versions to be processed in a same manner are set to collectively correspond to one view type. The processing component 26, coupled with the first acquiring component 22 and the second acquiring component 24, is configured to process request messages of the multiple EPG versions acquired by the first acquiring component 22 according to the one or more corresponding view types acquired by the second acquiring component 24.

Optionally, the device may further include a classifying component 28, coupled with the second acquiring component 24, which is configured to set one more EPG versions, which have a same number of table fields and have table structures in which a same field has a same length, to collectively correspond to one view type.

Optionally, the device may further include a storing component 30, coupled with the second acquiring component 24 and the classifying component 28, which is configured to store, into a CP, a corresponding relation between the one or more EPG versions, which have the same number of table fields and have the table structures in which the same field has the same length, and the view type corresponding to the one or more EPG versions, so that the second acquiring component may conveniently acquire the one or more corresponding view types.

Optionally, the second acquiring component 24 may include: a determining element 242 configured to determine the one or more corresponding view types; a reading element 244 coupled with the determining element 242, which is configured to read the one or more view types from a service DB.

Optionally, the device may further include: a third acquiring component 32, configured to acquire an interface type corresponding to a current request message; a judging component 34, coupled with the third acquiring component 32, which is configured to judge, based on the interface type, whether to process the request messages of the multiple EPG versions according to the one or more corresponding view types.

Optionally, the judging component 34 may include at least one of the following elements: a first processing element 342, configured to, in the case that the interface type is a FTP interface, process the request messages of the multiple EPG versions according to the one or more corresponding view types; a second processing element 344, configured to, in the case that the interface type is a TCP interface and/or a JSON interface, process the request messages of the multiple EPG versions directly; a third processing element 346, configured to, in the case that the interface type is a HTTP and/or a XML interface, convert a type of the request messages into JSON type and process the request messages of the multiple EPG versions directly.

A detailed description of the implementation process of the foregoing embodiments is given below with reference to further embodiments and drawings.

In another embodiment described below, a method for realizing a regional upgrade of an IPTV system without interrupting IPTV services is provided.

In the case that the method for realizing a regional upgrade of an IPTV system provided in this embodiment is implemented in the upgrade of IPTV the system, the edge devices may adopt a regional upgrade or may be upgraded in batches. The present situation is that existing IPTV services have to be interrupted during an upgrade of the IPTV system and such upgrade is time-consuming and has higher risk, though the method mentioned above, the present situation can be improved.

In the present exemplary embodiment, the method for regionally upgrading the IPTV system includes the following steps.

Step S2, the whole network emergency is initiated, all users log in the IPTV system in an emergency mode, and the IPTV system provides services in the emergency state.

Step S4, back-end service network elements of the IPTV system, which are located within a central machine room, are upgraded.

Step S6, under the condition that the back-end service network elements of the IPTV system can work normally, the whole network emergency is turned off.

Step S8, the EPG edge devices of the IPTV system are classified according to regional characteristics, for example, there are 1000 EPG devices, of which 50 EPG devices are upgraded, and meanwhile all end user loads are loaded on the remaining 950 EPG devices which are not upgraded (usually the upgrade may be implemented in the early morning when the number of online users is relatively small, and the remaining 950 EPG devices can meet the load performance requirement). After the 50 EPG devices are upgraded successfully and function normally after testing, the end user loads may be loaded back on these 50 EPG devices. Now there are upgraded EPG devices and EPG devices not upgraded existing simultaneously in the current network.

Step S10, after observing the upgraded devices all functioning well, the remaining 950 EPG devices are upgraded gradually.

The CP component of IPTV services in the exemplary embodiment needs to be compatible with at least two different EPG versions, e.g., the new and the old EPG versions (of course there may exist multiple EPG versions), the CP component also needs to process interface requests of at least two different EPG versions and return field data defined by each version. Services provided by interfaces of different EPG versions include but are not limited to log in, on-demand, live broadcast, systematic recording, time shift TV, collection and bookmark media service and the like.

A more detailed description with reference to the drawings is presented hereinafter.

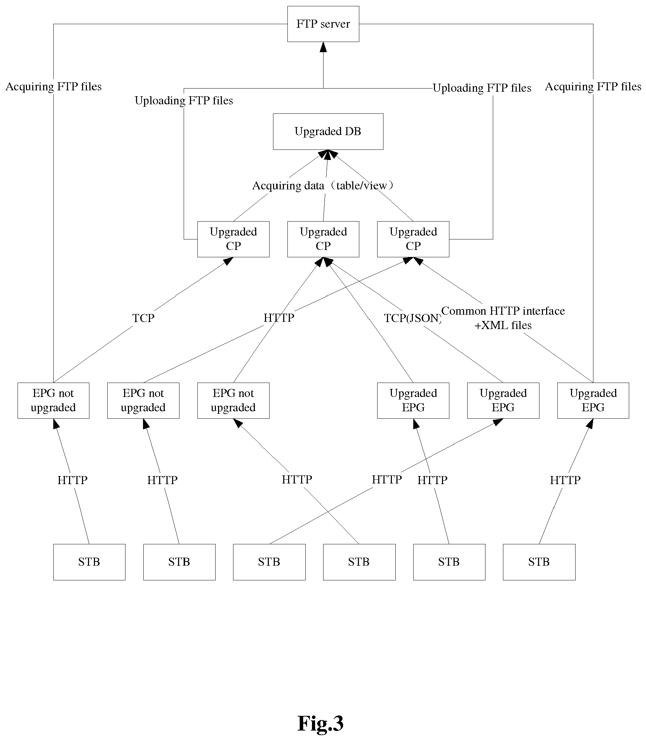

Fig. 3 is a structure diagram of realizing regional upgrade of the IPTV system according to another embodiment of the disclosure, as shown in Fig. 3, the structure includes:
a DB component, which is the service database component of the IPTV system and is mainly used to store some program data, content data and column data and the like;
a CP component, which is a core service control component of the IPTV system and is mainly used to process various kinds of request messages and return corresponding reply messages;
a EPG component, which is a electronic program guide and is mainly configured to receive various kinds of request messages sent by terminal equipment, process the request messages and then forward the processed messages to the CP component; and
a set top box (short for STB) component and a FTP server.

The following description will focus on one example that there are only two versions, i.e., a new version and an old version of EPG, to illustrate the technical process which enables to the CP module to be compatible with the new and the old EPG versions. The differences between a current EPG version and a to be upgraded EPG version lie in not only the change of the version number, but also at least one of the following aspects: a increase or decrease of the number of table fields in the new EPG version compared with the old EPG versions; a increase or decrease of the length of a certain field within a table structure of the new EPG version compared with the old EPG versions.

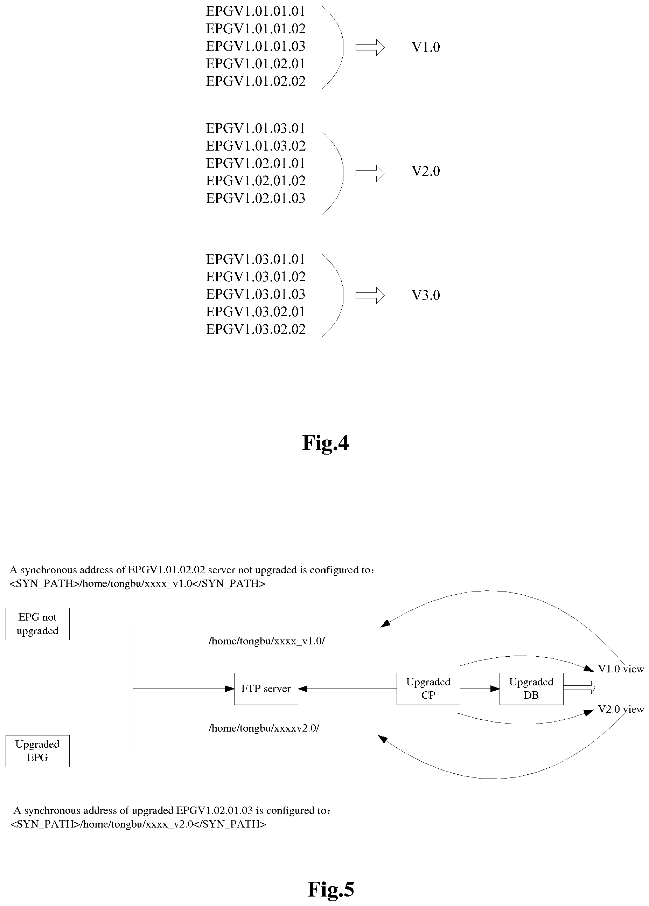

In another embodiment, protocol numbers, i.e., acting as one kind of abovementioned view types, are used for the classified management of two different EPG versions. The protocol number management means to perform classified management of several adjacent versions of EPG which do not make a major change in a view. Fig. 4 is an exemplary classification diagram of a protocol number management according to another embodiment of the disclosure. As shown in Fig. 4, several EPG versions, i.e., EPGV 1.01.01.01, EPGV 1.01.01.02, EPGV 1.01.01.03, EPGV1.01.02.01 and EPGV1.01.02.02 share one view which corresponds to the protocol number VI.0. Of course, there may exist other ways for classifying the EPG versions during practical use. In the present embodiment, the CP component is used to maintain corresponding relations between the EPG versions and the protocol numbers, and the DB component is used to maintain views corresponding to all protocol numbers.

In the present embodiment, four interfaces including a FTP interface, a HTTP+XML interface, a TCP interface and a JSON interface are compatible with the CP component and the EPG component. Taking these four interfaces as an example, a technical process for making the CP component compatible with the new and the old EPG versions is described as follows.

As to the FTP interface, the program data watched by users in the EPG is mainly acquired by the EPG component from the DB component via the CP component, and the data synchronization between the EPG component and the CP component is processed via the FTP interface. Assuming that the EPG versions are to be upgraded from EPGV 1.01.02.02 to EPGV1.02.01.03, if a regional upgrade of the EPG versions is adopted, the situation that both the EPGV 1.01.02.02 and the EPGV1.02.01.03 may exist simultaneously occurs. The CP component may acquire corresponding protocol numbers (i.e., view types, in this embodiment the VX.0 is used to number view types), VI.0 and V2.0 respectively, from the EPG versions not upgraded and the upgraded EPG versions, and then read corresponding views from the DB component to acquire synchronous data, that means the CP component acquires two kinds of view data. The EPG component then acquires corresponding synchronous data via the FTP interface according to respectively maintained protocol numbers, in this way, the compatibility is realized. Fig. 5 is a flow diagram of acquiring different synchronous data by two EPG versions according to another embodiment of the disclosure. As shown in Fig. 5, after all EPG versions are upgraded to new EPGV 1.02.01.03, the CP component may be configured to only acquire views of protocol number V2.0, so as to only acquire one kind of synchronous data, thus data redundancy is avoided.

As to the TCP interface and/or the JSON interface, the IPTV system provides services such as collection service, bookmark service and the like. Users may add collection, bookmark, children lock, and apply for personal network recording and the like in EPG, all of these operations are processed via the TCP and/or JSON interface. The JSON interface sends and receives messages by using the way of key-value, since the key-value does not distinguish the limit of the length, position and the number of fields, the messages processing performed by the TCP and JSON manners may support a regional upgrade.

As to the HTTP+XML interface, the IPTV system provides the users with collection service, bookmark service and the like, when users inquire collection list, bookmark list and the product list charged by the subscribed number, these operations are processed by the HTTP+XML interface. The EPG receives the returned HTTP messages, parses such messages, converts the parsed messages into map groups, and further convert the map groups into JSON type messages. The JSON type messages are directly stored into the memory library of the EPG, then converted into decorator and returned back to a terminal. That is to say, if there is a change of length or a position of the field, the data reading of the terminal may not be affected by such change. For example, if a certain table of EPGV1.01.02.02 has three fields, i.e., A, B, C, a processing mode of JSON may be simply described as A=1, B=2, C=3; meanwhile, a new filed D is added into this table of the EPGV1.02.01.03, then the processing mode of JSON is changed to A=1, B=2, C=3, D=4. In the case that two EPG versions exist simultaneously, the old EPG version only cares about A, B, C, while the new EPG version cares about A, B, C, D, therefore these two types of messages may be compatible with JSON type messages. However, the parsing may fail if the XML type messages are used, therefore, the regional upgrade can be supported by converting the HTTP+XML type messages into JSON type messages.

Through the present embodiment, the IPTV system may be upgraded without affecting users. The upgrade of the whole IPTV system may be completed regionally as well as in batches while ensuring users have favorable service experiences. Compared with the upgrade manners adopted in the related art, the upgrade described in the present embodiment is safer and more flexible, which may provide favorable safeguard for users and operators.

In another embodiment, a kind of software is provided to implement the technical solutions described in the abovementioned embodiments.

In another embodiment, a storage medium is provided, in which the abovementioned software is stored. The storage medium includes but is not limited to an optical disc, a floppy disc, a hard disc, an erasable memory and the like.

Those skilled in the art understand that the abovementioned components or steps of the present disclosure may be implemented by general purpose computing devices, the implementation of such components or steps may be integrated into a single computing device or distributed into a network consisting of many computing devices, alternatively the components or steps may be implemented by executable programmable codes stored in the computing device, and such executable programmable codes are executed by computing devices. Under certain conditions, the executive sequence of steps may differ from what is described in this disclosure, and the components and steps may be integrated into different integrated circuit components or into one integrated circuit component. The present disclosure is not limited to any specific combination of hardware and software.

The foregoing are merely embodiments of the present application and not to be intended to limit the present disclosure. For those skilled in the art, the present disclosure could have various modifications and variations. Any modifications, equivalent replacements and improvements, which fall within the essence of the present disclosure, shall be included in the protection scope defined by the appended claims of the present disclosure.

### Industrial Applicability

As described above, a method and device for processing messages of IPTV are provided in the embodiments of the disclosure, and the following beneficial effects are achieved: providing a technical basis for achieving the service upgrade of an IPTV system in batches so that the losses of benefits and operation of an operator caused by the upgrade can be decreased and reduced to the maximum extent, and ensuring a favorable service experiences for users.

## Claims

1. A method for processing messages of Internet Protocol Television or Interactive Personal Television, IPTV, comprising:
acquiring multiple Electronic Program Guide, EPG, versions which simultaneously exist (S102);
acquiring one or more corresponding view types according to the multiple EPG versions, wherein a group of EPG versions to be processed in a same manner are set to collectively correspond to one view type (S104); and
processing request messages of the multiple EPG versions according to the one or more corresponding view types (S106);
before acquiring the one or more corresponding view types according to the multiple EPG versions, further comprising:
setting one or more EPG versions, which have a same number of table fields and have table structures in which a same field has a same length, to collectively correspond to one view type;
before processing the request messages of the multiple EPG versions according to the one or more corresponding view types, further comprising:
acquiring a corresponding interface type of current request messages;
judging, based on the interface type, whether to process request messages of the multiple EPG versions according to the one or more corresponding view types;
wherein judging, based on the interface type, whether to process request messages of the multiple EPG versions according to the one or more corresponding view types comprises at least one of:
in the case that the interface type is a File Transfer Protocol, FTP, interface, processing the request messages of the multiple EPG versions according to the one or more corresponding view types;
in the case that the interface type is a Transmission Control Protocol, TCP, interface and/or a JavaScript Object Notation, JSON, interface, processing the request messages of the multiple EPG versions directly;
in the case that the interface type is a Hypertext Transfer Protocol, HTTP, and/or an Extensible Markup Language, XML, interface, converting a type of the request messages into JSON type and process the request messages of the multiple EPG versions directly.

2. The method of claim 1, after setting the one or more EPG versions, which have the same number of table fields and have the table structures in which the same field has the same length, to collectively correspond to one view type, further comprising:
storing, into a control point, a corresponding relation between the one or more EPG versions, which have the same number of table fields and have the table structures in which the same field has the same length, and the view type corresponding to the one or more EPG versions.

3. The method of any one of claims 1 to 2, wherein acquiring the one or more corresponding view types according to the multiple EPG versions comprises:
determining the one or more corresponding view types according to the multiple EPG versions;
reading the one or more corresponding view types from a service database.

4. A device for processing messages of Internet Protocol Television or Interactive Personal Television, IPTV, comprising:
a first acquiring component (22), configured to acquire multiple Electronic Program Guide, EPG, versions which simultaneously exist;
a second acquiring component (24), configured to acquire one or more corresponding view types according to the multiple EPG versions, wherein a group of EPG versions to be processed in a same manner are set to collectively correspond to one view type;
a processing component (26), configured to process request messages of the multiple EPG versions according to the one or more corresponding view types;
a classifying component, configured to set one or more EPG versions, which have a same number of table fields and have table structures in which a same field has a same length, to collectively correspond to one view type;
a third acquiring component, configured to acquire a corresponding interface type of current request messages;
a judging component, configured to judge, based on the interface type, whether to process request messages of the multiple EPG versions according to the one or more corresponding view types;
wherein the judging component comprises at least one of the following elements:
a first processing element, configured to, in the case that the interface type is a File Transfer Protocol, FTP, interface, process the request messages of the multiple EPG versions according to the one or more corresponding view types;
a second processing element, configured to, in the case that the interface type is a Transmission Control Protocol, TCP, interface and/or a JavaScript Object Notation, JSON, interface, process the request messages of the multiple EPG versions directly;
a third processing element, configured to, in the case that the interface type is a Hypertext Transfer Protocol, HTTP, and/or an Extensible Markup Language, XML, interface, convert a type of the request messages into JSON type and process the request messages of the multiple EPG versions directly.

5. The device of claim 4, the device further comprising:
a storing component, configured to store, into a control point, a corresponding relation between the one or more EPG versions, which have the same number of table fields and have the table structures in which the same field has the same length, and the view type corresponding to the one or more EPG versions.

6. The device of any one of claims 4 to 5, wherein the second acquiring component comprises:
a determining element, configured to determine the one or more corresponding view types according to the multiple EPG versions;
a reading element, configured to read the one or more corresponding view types from a service database.

## Patentansprüche

1. Verfahren zum Verarbeiten von Nachrichten des Internet Protocol Television oder des Interactive Personal Television, IPTV, umfassend:
Erfassen mehrerer gleichzeitig existierender Electronic Program Guide, EPG, Versionen (S102);
Erfassen eines oder mehrerer entsprechender Ansichtstypen gemäß den mehreren EPG-Versionen, wobei eine Gruppe von EPG-Versionen, die auf die gleiche Weise verarbeitet werden sollen, so eingestellt wird, dass sie zusammen einem Ansichtstyp entsprechen (S104); und
Verarbeiten von Anforderungsnachrichten der mehreren EPG-Versionen gemäß dem einen oder den mehreren entsprechenden Ansichtstypen (S106);
vor dem Erfassen des einen oder der mehreren entsprechenden Ansichtstypen gemäß den mehreren EPG-Versionen, ferner umfassend:
Einstellen einer oder mehrerer EPG-Versionen, die die gleiche Anzahl von Tabellenfeldern und Tabellenstrukturen aufweisen, bei denen das gleiche Feld die gleiche Länge hat, so dass sie zusammen einem Ansichtstyp entsprechen;
vor dem Verarbeiten der Anforderungsnachrichten der mehreren EPG-Versionen gemäß dem einen oder den mehreren entsprechenden Ansichtstypen, ferner umfassend:
Erfassen eines entsprechenden Schnittstellentyps von aktuellen Anforderungsnachrichten;
Beurteilen, auf der Grundlage des Schnittstellentyps, ob Anforderungsnachrichten der mehreren EPG-Versionen gemäß dem einen oder den mehreren entsprechenden Ansichtstypen verarbeitet werden sollen;
wobei das Beurteilen auf der Grundlage des Schnittstellentyps, ob Anforderungsnachrichten der mehreren EPG-Versionen gemäß dem einen oder den mehreren entsprechenden Ansichtstypen verarbeitet werden sollen, mindestens eines der Folgenden umfasst:
in dem Fall, dass der Schnittstellentyp eine File Transfer Protocol, FTP, Schnittstelle ist, Verarbeiten der Anforderungsnachrichten der mehreren EPG-Versionen gemäß dem einen oder den mehreren entsprechenden Ansichtstypen;
in dem Fall, dass der Schnittstellentyp eine Transmission Control Protocol, TCP, Schnittstelle und/oder eine JavaScript Object Notation, JSON, Schnittstelle ist, direktes Verarbeiten der Anforderungsnachrichten der mehreren EPG-Versionen;
in dem Fall, dass der Schnittstellentyp eine Hypertext Transfer Protocol, HTTP, und/oder eine Extensible Markup Language, XML, Schnittstelle ist, Umwandeln eines Typs der Anforderungsnachrichten in den JSON-Typ und direktes Verarbeiten der Anforderungsnachrichten der verschiedenen EPG-Versionen.

2. Verfahren nach Anspruch 1, das nach dem Einstellen der einen oder mehreren EPG-Versionen, die die gleiche Anzahl von Tabellenfeldern und Tabellenstrukturen aufweisen, bei denen das gleiche Feld die gleiche Länge aufweist, so dass sie zusammen einem Ansichtstyp entsprechen, ferner Folgendes umfasst:
Speichern einer entsprechenden Beziehung zwischen der einen oder den mehreren EPG-Versionen, die die gleiche Anzahl von Tabellenfeldern und Tabellenstrukturen aufweisen, bei denen das gleiche Feld die gleiche Länge aufweist, und dem Ansichtstyp, der der einen oder den mehreren EPG-Versionen entspricht, an einem Kontrollpunkt.

3. Verfahren nach einem beliebigen der Ansprüche 1 bis 2, wobei das Erfassen des einen oder der mehreren entsprechenden Ansichtstypen gemäß den mehreren EPG-Versionen umfasst:
Ermitteln des einen oder der mehreren entsprechenden Ansichtstypen gemäß den mehreren EPG-Versionen;
Lesen des einen oder der mehreren entsprechenden Ansichtstypen aus einer Servicedatenbank.

4. Vorrichtung zum Verarbeiten von Nachrichten des Internet Protocol Television oder des Interactive Personal Television, IPTV, umfassend:
eine erste Erfassungskomponente (22), die konfiguriert ist, um mehrere gleichzeitig existierende Electronic Program Guide, EPG, Versionen zu erfassen;
eine zweite Erfassungskomponente (24), die konfiguriert ist, um einen oder mehrere entsprechende Ansichtstypen gemäß den mehreren EPG-Versionen zu erfassen, wobei eine Gruppe von EPG-Versionen, die auf die gleiche Weise verarbeitet werden sollen, so eingestellt wird, dass sie zusammen einem Ansichtstyp entsprechen;
eine Verarbeitungskomponente (26), die konfiguriert ist, um Anforderungsnachrichten der mehreren EPG-Versionen gemäß dem einen oder den mehreren entsprechenden Ansichtstypen zu verarbeiten;
eine Klassifizierungskomponente, die konfiguriert ist, um eine oder mehrere EPG-Versionen, die die gleiche Anzahl von Tabellenfeldern und Tabellenstrukturen aufweisen, bei denen das gleiche Feld die gleiche Länge hat, so einzustellen, dass sie zusammen einem Ansichtstyp entsprechen;
eine dritte Erfassungskomponente, die konfiguriert ist, um einen entsprechenden Schnittstellentyp von aktuellen Anforderungsnachrichten zu erfassen;
eine Beurteilungskomponente, die konfiguriert ist, um, auf der Grundlage des Schnittstellentyps zu beurteilen, ob Anforderungsnachrichten der mehreren EPG-Versionen gemäß dem einen oder den mehreren entsprechenden Ansichtstypen verarbeitet werden sollen;
wobei die Beurteilungskomponente mindestens eines der folgenden Elemente umfasst:
ein erstes Verarbeitungselement, das konfiguriert ist, um in dem Fall, dass der Schnittstellentyp eine File Transfer Protocol, FTP, Schnittstelle ist, die Anforderungsnachrichten der mehreren EPG-Versionen gemäß dem einen oder den mehreren entsprechenden Ansichtstypen zu verarbeiten;
ein zweites Verarbeitungselement, das konfiguriert ist, um in dem Fall, dass der Schnittstellentyp eine Transmission Control Protocol, TCP, Schnittstelle und/oder eine JavaScript Object Notation, JSON, Schnittstelle ist, die Anforderungsnachrichten der mehreren EPG-Versionen direkt zu verarbeiten;
ein drittes Verarbeitungselement, das konfiguriert ist, um in dem Fall, dass der Schnittstellentyp eine Hypertext Transfer Protocol, HTTP, Schnittstelle und/oder eine Extensible Markup Language, XML, Schnittstelle ist, einen Typ der Anforderungsnachrichten in einen JSON-Typ umzuwandeln und die Anforderungsnachrichten der mehreren EPG-Versionen direkt zu verarbeiten.

5. Vorrichtung nach Anspruch 4, wobei die Vorrichtung ferner Folgendes umfasst:
eine Speicherkomponente, die konfiguriert ist, um eine entsprechende Beziehung zwischen der einen oder den mehreren EPG-Versionen, die die gleiche Anzahl von Tabellenfeldern und Tabellenstrukturen aufweisen, in denen das gleiche Feld die gleiche Länge aufweist, und dem Ansichtstyp, der der einen oder den mehreren EPG-Versionen entspricht, an einem Kontrollpunkt zu speichern.

6. Vorrichtung nach einem beliebigen der Ansprüche 4 bis 5, wobei die zweite Erfassungskomponente Folgendes umfasst:
ein Ermittlungselement, das konfiguriert ist, um den einen oder die mehreren entsprechenden Ansichtstypen gemäß den mehreren EPG-Versionen zu ermitteln;
ein Leseelement, das konfiguriert ist, um den einen oder die mehreren entsprechenden Ansichtstypen aus einer Servicedatenbank zu lesen.

## Revendications

1. Procédé de traitement de messages de télévision à protocole Internet ou de télévision personnelle interactive, IPTV, comprenant :
l'acquisition de multiples versions du guide de programme électronique, EPG, qui existent simultanément (S102) ;
l'acquisition d'un ou plusieurs types de vue correspondants selon les multiples versions d'EPG, dans lequel un groupe de versions d'EPG devant être traité de la même manière est réglé pour correspondre collectivement à un seul type de vue (S104) ; et
le traitement de messages de requête des multiples versions d'EPG en fonction du ou des types de vue correspondants (S106) ;
avant l'acquisition du ou des types de vue correspondants selon les multiples versions d'EPG, comprenant en outre :
la définition d'une ou plusieurs versions d'EPG, qui aient un même nombre de champs de table et des structures de table dans lesquelles un même champ a une même longueur, pour correspondre collectivement à un seul type de vue ;
avant de traiter les messages de requête des multiples versions d'EPG en fonction du ou des types de vue correspondants, comprenant en outre :
l'acquisition d'un type d'interface correspondant de messages de requête en cours ;
l'évaluation, en fonction du type d'interface, pour savoir s'il convient de traiter des messages de requête des multiples versions d'EPG en fonction du ou des types de vue correspondants ;
dans lequel l'évaluation, en fonction du type d'interface, pour savoir s'il convient de traiter des messages de requête des multiples versions d'EPG en fonction du ou des types de vue correspondants, comprend au moins l'un des éléments suivants :
dans le cas où le type d'interface est une interface de protocole de transfert de fichier, FTP, le traitement des messages de requête des multiples versions d'EPG en fonction du ou des types de vue correspondants ;
dans le cas où le type d'interface est une interface de protocole de commande de transmission, TCP, et/ou une interface de notation d'objet JavaScript, JSON, le traitement direct des messages de requête des multiples versions d'EPG ;
dans le cas où le type d'interface est une interface de protocole de transfert hypertexte, HTTP, et/ou un langage de balisage extensible, XML, la conversion d'un type des messages de requête en type JSON et le traitement direct des messages de requête des multiples versions d'EPG.

2. Procédé selon la revendication 1, après avoir défini la ou les versions d'EPG, qui comptent le même nombre de champs de table et dont le même champ des structures de table a la même longueur, pour correspondre collectivement à un seul type de vue, comprenant en outre :
le stockage, dans un point de commande, d'une relation correspondante entre la ou les versions d'EPG, qui comptent le même nombre de champs de table et dont le même champ des structures de table a la même longueur, et le type de vue correspondant à la ou aux versions d'EPG.

3. Procédé selon l'une quelconque des revendications 1 à 2, dans lequel l'acquisition du ou des types de vue correspondants selon les multiples versions d'EPG comprend :
la détermination du ou des types de vue correspondants en fonction des multiples versions d'EPG ;
la lecture du ou des types de vue correspondants dans une base de données de services.

4. Dispositif de traitement de messages de télévision sur protocole Internet ou de télévision personnelle interactive, IPTV, comprenant :
un premier composant d'acquisition (22), configuré pour acquérir de multiples versions de guide de programme électronique, EPG, qui existent simultanément ;
un deuxième composant d'acquisition (24), configuré pour acquérir un ou plusieurs types de vue correspondants selon les multiples versions d'EPG, dans lequel un groupe de versions d'EPG devant être traitées d'une même manière est réglé pour correspondre collectivement à un seul type de vue ;
un composant de traitement (26), configuré pour traiter des messages de requête des multiples versions d'EPG en fonction du ou des types de vue correspondants ;
un composant de classification, configuré pour définir une ou plusieurs versions d'EPG qui comptent un même nombre de champs de table et dont un même champ des structures de table a une même longueur, pour correspondre collectivement à un seul type de vue ;
un troisième composant d'acquisition, configuré pour acquérir un type d'interface correspondant de messages de requête en cours ;
un composant d'évaluation, configuré pour évaluer, en fonction du type d'interface, s'il convient de traiter des messages de requête des multiples versions d'EPG en fonction du ou des types de vue correspondants ;
dans lequel le composant d'évaluation comprend au moins l'un des éléments suivants :
un premier élément de traitement, configuré pour, dans le cas où le type d'interface est une interface de protocole de transfert de fichier, FTP, traiter les messages de requête des multiples versions d'EPG en fonction du ou des types de vue correspondants ;
un deuxième élément de traitement, configuré pour, dans le cas où le type d'interface est une interface de protocole de commande de transmission, TCP, et/ou une interface de notation d'objet JavaScript, JSON, traiter directement les messages de requête des multiples versions d'EPG ;
un troisième élément de traitement, configuré pour, dans le cas où le type d'interface est une interface de protocole de transfert hypertexte, HTTP, et/ou une interface de langage de balisage extensible, XML, convertir un type de messages de requête en type JSON et traiter directement les messages de requête des multiples versions d'EPG.

5. Dispositif selon la revendication 4, le dispositif comprenant en outre :
un composant de stockage, configuré pour stocker, dans un point de commande, une relation correspondante entre la ou les versions d'EPG, qui comptent le même nombre de champs de table et dont le même champ des structures de table a la même longueur, et le type de vue correspondant à la ou aux versions d'EPG.

6. Dispositif selon l'une quelconque des revendications 4 à 5, dans lequel le deuxième composant d'acquisition comprend :
un élément de détermination, configuré pour déterminer le ou les types de vue correspondants en fonction des multiples versions d'EPG ;
un élément de lecture, configuré pour lire le ou les types de vue correspondants dans une base de données de services.
